Europäisches Patentamt

(19) European Patent Office

Office européen des brevets

(11) Publication number: **0 074 663**
**A2**

(12) **EUROPEAN PATENT APPLICATION**

(21) Application number: **82108449.8**

(22) Date of filing: **14.09.82**

(51) Int. Cl.³: **G 06 F 15/21**

(30) Priority: **14.09.81 ZA 816347**

(43) Date of publication of application:
**23.03.83 Bulletin 83/12**

(84) Designated Contracting States:
**AT BE CH DE FR GB IT LI LU NL SE**

(71) Applicant: **van Oosterzee Duminy, Johannes Jacobus**
**Plot 85 Poortview**
**District Roodepoort Transvaal Province(ZA)**

(72) Inventor: **van Oosterzee Duminy, Johannes Jacobus**
**Plot 85 Poortview**
**District Roodepoort Transvaal Province(ZA)**

(74) Representative: **UEXKÜLL & STOLBERG Patentanwälte**
**Beselerstrasse 4**
**D-2000 Hamburg 52(DE)**

(54) **Aid for a receptionist.**

(57) A receptionist's aid has a memory for storing receptionist's information input through a processing means, and has a display screen for displaying input and recalled information. The aid can interact with a private automatic branch exchange to automatically receive extension numbers dialled from the private automatic branch exchange by a telephonist, and recall information stored in the memory which represents a person to be found at that extension number. Persons can access their respective memory facilities by dialling their own extension number, and by dialling further predetermined codes can store and delete their own receptionist's information in and from the memory.

FIG. 1

EP 0 074 663 A2

COMPLETE DOCUMENT

## BACKGROUND TO THE INVENTION

THIS INVENTION relates to an aid for a receptionist to enable her to easily obtain information concerning a person in the firm which may be required by a caller, enquiring either in person or telephonically.

The type of information required by a receptionist about a person working in the firm is usually whether he is in or out of office, whether he is away, or if in office whether he is in conference or otherwise not available and in either case what time or date the person will be available, and whether he is available in an office other than his own. The usual procedure in an office is for a person to inform the receptionist that he is not available or will be out of office, giving his destination and approximately when he expects to be back. Information is also left by callers in the form of messages to telephone back and so on. This kind of information is hereinafter referred to as 'receptionist information'. The receptionist then makes a note of the person and the information, or the person may hand the receptionist a note containing the information.

**0074663**

This system does not operate well when the number of persons is fairly large and a considerable number of notes have to be made or kept, which require sorting and can easily be lost or misplaced. This can result in the required person's office being telephoned to establish whether the person is available, or present at all. If the person does not have a secretary, this information may be difficult to obtain from the person's co-workers and can involve a significant loss of time for the receptionist, and the person calling as well as for co-workers who have to obtain the information.

A number of electronic diaries or note books are known which can store information, as can computers in general.

Most of these inventions are directed at achieving portability of the devices, or at specific functions. For example, United States Patent 4,053,735 to Foudos, describes a hand-held bank credit disbursement unit for inter-action with a fixed unit at a bank.

So to, United Kingdom Patent Application 2,027,960A discloses a hand-held calculator for determining travelling expenses, and United Kingdom Patent Application 2,048,530A discloses a storage and display apparatus for accounting data.

/.....

OBJECT OF THE INVENTION

It is the object of this invention to provide a receptionist's aid which can be used to automate at least a portion of a receptionist's functions.

SUMMARY OF THE INVENTION

In accordance with this invention there is provided a receptionist's aid comprising an addressable memory, input means, display means, and signal processing means for recording input information in the memory and carrying out input instructions for deletion and display of recorded information, characterised in that there are a plurality of memory facilities in the memory each representing at least one person, and the input means and memory is adapted to input and record in each facility at least one item of receptionist information relating to the represented person.

Further features of the invention provide for the signal processing means to be adapted to activate visible indication means representing a person, when information is stored in the memory facility representing that person, and for the means to be further adapted to deactivate that visible indication means when all information is deleted from that memory facility.

/.....

Further, there is provided for the signal processing means to receive input information and instruction from branch lines of a private automatic branch exchange, and for the signal processing means to include means for indentifying a dialled extension number from the private automatic branch exchange with a memory facility representing at least one person to be found at that extension number.

The processing means in this case, will preferably also interpret a predetermined code of at least one digit dialled from an extension number, which number is identified with a memory facility, as an instruction to store information, and will interpret digits as representing items of receptionist's information, and will store such information in the identified facility, and further will cease storing information on receipt of a further predetermined dialled digit code representing an instruction that the information message has ended.

There is also provided for the signal processing means to be adapted to delete information from a memory facility which is identified with a dialled extension number, on receipt of a predetermined code of dialled digits from that extension number.

In the case where the receptionist's aid is coupled with a private automatic branch exchange, there is

/.....

also provided for the signal processing means to be able to identify a telephone extension number, which is dialled from the private automatic branch exchange unit by the receptionist, with a memory facility representing a person normally to be found at that extension number, and there is also provided for the signal processing means to automatically check whether that memory facility has receptionist's information stored therein, and if so, to display that information.

Preferably, while the signal processing means is searching, or if it in fact finds receptionist's information in a memory facility, play-back means is provided for automatically transmitting a verbal message to a caller on the incoming line requiring the particular extension number. The message can be to the effect that the caller should hold his line. Switching means is also provided for routing the incoming call back from the extension line dialled by the telephonist to the receptionist's telephone piece, so that the receptionist can relay displayed information relating to the person required to the person making the incoming call.

Where a plurality of persons are to found at one extension number, it is preferable that an additional identifying code is added to the extension number in order to identify each person. For example, if an alpha-numeric

/....

input system is used, the extension number could be followed by the initials of the person required at the particular extension number, or if dialled digits from a branch line of an extension to a PABX is required, an additional code after the actual extension number would be added in order to identify the memory facility for the particular person at that exchange.

The invention extends to a method of aiding a receptionist utilising an addressable memory, input means, display, and signal processing means for recording input information in the memory and carrying out input instructions for deletion and for display recorded information, said method comprising connecting a private automatic branch exchange to have extension lines connected to a decoder for interpreting dialled digits as input information and record and deletion instructions; dialling an extension number to address a memory facility in the memory which represents a person normally found at that extension; identifying the dialled extension number with that memory facility representing that person; dialling and identifying an ensuing predetermined code of dialled digits as receptionist's information for that person; dialling and identifying a further ensuing predetermined code of dialled digits for instructions to store that information in that memory facility; and, dialling and identifying a still further ensuing predetermined code of dialled digits for instructing that the message has ended.

A further feature of the invention also provides for a further ensuing predetermined code of dialled digits after an extension number to be identified and acted upon as an instruction to delete information

/......

from the memory facility which represents a person to be found at the dialled extension number.

There is still further provided for the automatic identification of an extension number dialled from the private automatic branch exchange unit itself, with a memory facility representing a person to be found at that extension number , and for the automatic displaying of any receptionist's information stored in that memory, on the display unit, at a receptionist's work station.

Still further, there is provided for the automatic routing, on finding of any such receptionist's information in the memory facility, of an incoming call from which that extension number was requested, back to the receptionist's telephone piece. There is also provided for, on the finding of any receptionist's information in the memory facility, the automatic playing of a recorded message to a caller on the incoming call line, from which that extension number was requested.

Preferred embodiments of the invention are described below by way of example only, and with reference to the accompanying drawings, in which;

Fig. 1    is an isometric view of a display unit and keyboard with visual indication means according to the invention; and,

Fig. 2    is a block diagram of a receptionist's
          aid according to the invention
          connected to a private automatic branch
          exchange.

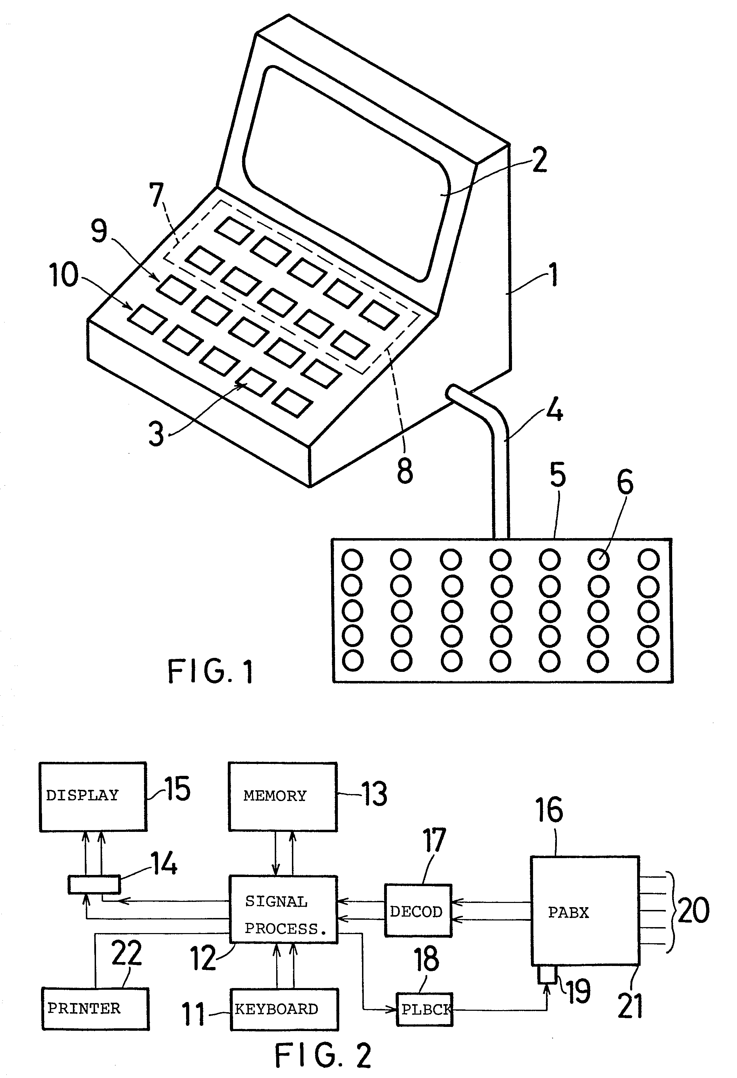

Referring now to figure 1, a receptionist's aid comprises a housing 1, having a display screen 2, and an input keyboard 3 on the housing. A memory facility and signal processing units within the housing (not shown) are connected by a line 4 to a visual display board 5 which has a martrix of light emitting diode 6 mounted thereon.

The keyboard 3 has keys indicated by numeral 7 as command keys for inputting instructions to the signal processing means, such as "store", "delete", "recall", and "execute". The key board also has a further set of keys indicated in dotted lines by numeral 8, each key of which represents a standard phrase of receptionist's information, such as "not available", "returning at", "on holiday until", "return call from", and the like.

The remaining two horizontal rows of keys 9 and 10, each represent a digit from 0 through to 9.

In use, receptionist's information is given to a receptionist by a person within the firm, either verbally

/.....

through the internal telephone system, or personally, or by means of a note.

The receptionist then enters the received receptionist's information in the memory facility representing that person. This is achieved by pressing the appropriate phrase key 8 and filling in in any numerical information as to time or dates of return. The signal processing means automatically displays this input on the screen. The receptionist then uses the command key as "store", followed by the numerical memory facility code which represents the memory facility for that person, and then the command key "execute", which will store the required receptionist's information in the correct memory facility. This process is followed for all the people who may wish to leave messages with the receptionist as to whether they will be out or in conference and so. The storing of information in a particular memory facility will automatically cause the signal processing means to light up the light emitting diode 6 on the display board 5, which represents the particular person in whose memory facility information has been stored. Thus a receptionist, by looking at the display board 5, can determine whether any receptionist's information is stored for a particular person.

/.....

Should an enquiry concerning a person now be received by the receptionist, she would first look at the display board to ascertain whether any information is stored in the memory facility for that person. If no information is stored, the receptionist would put the call through to the person, or deal otherwise with the enquiry as if the person were present and available. Should the display indicate that information is stored, the receptionist then presses the "recall" command key, followed by the numerical code for the memory facility representing that person, followed by the "execute" key, and the stored information for that person will then be displayed on the screen 2.

The receptionist can then relay the displayed receptionist's information to the person making the enquiry.

Clearly it is not essential to have the display board with its visual indicating means, and the receptionist could equally well perform a recall command on the memory facility representing the person about whom enquiries are made, and if nothing is stored therein, then nothing would be displayed, or a message to that effect would be displayed.

It will be appreciated that the electronics logic and circuitry required for this task is easily within the knowledge of the person skilled in the art.

/.....

Referring now to figure 2, a receptionist's aid includes a keyboard 11 connected to a signal processor 12 which is connected to execute commands and store and delete information in and from a memory 13, and is connected through a decoder-driver 14 to a display 15.

A private automatic branch exchange 16 is connected through a decoder 17 to the signal processor, and the signal processor is connected to a verbal message play-back unit 18, which passes through to switching means 19 to the private automatic branch exchange. The keyboard is adapted to have keys for standard phrases of receptionist's information, alpha-numeric keys, and command keys, for addressing memories representing particular people to store and delete receptionist information therein, and to instruct the signal processor to display information which is recalled from such memories.

An additional input means besides the keyboard, is provided from the private automatic branch exchange (PABX) 16. The PABX is connected to the decoder 17 so that dialled digits from internal branch lines 20 can be decoded by the decoder 17 to represent specific input instructions to be received by the signal processor. The decoder is also connected to decode digits dialled from the telephonist or receptionist's station 21, which represent input instructions to the signal processor.

/.....

The switching means 19 is instructed from the signal processor, and is capable of routing the verbal message from the play-back unit to an incoming call line. The decoder 17 conveniently includes a pulse counter and an interface for converting the counted pulses into instructions which are intellegible to the signal processor. The signal processor will be adapted to interpret a first set of dialled digits as predetermined code representing a particular memory facility, followed by a predetermined code representing items of receptionist's information, and then followed by a predetermined code indicating that the message has ended, and that the receptionist information can now be stored in the particular memory facility.

A further alternative predetermined code following the memory facility identification is provided to instruct the signal processing means to delete stored information from the identified memory facility.

In use, when a particular extension number is requested of a telephonist, the telephonist will dial the extension number from the station 21 and it will be automatically routed through the decoding device 17 to the signal processor, which on identifying a particular memory facility with that extension number, will recall any information in that memory and display it.

/.....

The displayed information can now be verbally relayed by the receptionist to the person making the call. In this embodiment, the signal processor on recalling the information from the particular memory facility which is identified with the extension number, will automatically route the telephone call back from the extension line that is being dialled to the station 21 so that the receptionist can relay the displayed information without switching any lines.

This embodiment also provides for the signal processor to activate the play-back means on recalling the receptionist's information from the memory, and the play-back unit plays a recorded message which is switched through the switching means 19 to the incoming call; the message can be to the effect that the caller should hold the line for a moment, or the like.

It will be appreciated that in large firms the telephonist is frequently not the same person as the receptionist. In this case, the telephonist will simply be dialling a required extension number, which will be automatically be routed through the decoding device to the receptionist's aid, and the display unit will be available at the receptionist's desk, enabling the telephonist to deal further with the caller. Thus the automatic routing of the incoming call through to the receptionist's telephone piece, as well as the play-back of the message, are

/.....

important features, since the telephonist then has nothing further to do with the call until the caller rings off and the lines are to be switched back again.

It will be further appreciated that the receptionist may utilise her telephone dialling piece as an input means to the signal processor and memory, and the memory facility can be identified, and receptionist's information stored and deleted in the memory facility, by means of dialling the correct predetermined codes for these operations. However, it is preferable that the receptionist has the keyboard 11 available to her, as a matter of convenience, since it is considerably easier to input information from the keyboard, having standard phrases thereon, than to follow a coded system which has to be input by means of a manual telephone dial. It will be appreciated that the connection of a printer 22 to the signal processor for the printing of any receptionist information which may be stored in the memory, is a simple matter. In this way, receptionist's information which is of importance to the person within the firm, such as messages to phone a caller back or the like, can be printed out when the person from the firm returns and the printout is given to him as a telephone message from the receptionist.

It is considered that the invention provides a useful and effective receptionist's aid, particularly but not exclusively, for large firms having many people working for them.

CLAIMS

1.   A receptionist's aid comprising an addressable memory, input means, display means, and signal processing means for recording input information in the memory and carrying out input instructions for deletion and for display of recorded information,

characterised in that

there are a plurality of memory facilities in the memory each are representing at least one person, and the input means and memory is adapted to input and record in each facility at least one item of receptionist's information relating to a represented person.

2.   A receptionist's aid as claimed in claim 1 in which the signal processing means is connected to activate visible indication means representing a person, when information is stored in the memory facility representing that person, and is adapted to deactivate that visible indication means when all information is deleted from that memory facility.

/.....

3.  A receptionists's aid as claimed in claim 1 or 2 in which the signal processing means is adapted to receive input information and instruction in the form of dialled digits from a private automatic branch exchange.

4.  A receptionist's aid as claimed in claim 3 in which the signal processing means includes means for identifying a dialled extension number from the private automatic branch exchange with a memory facility representing at least one person to be found at that extension number.

5.  A receptionist's aid as claimed in claim 4 in which the signal processing means is adapted to interpret a predetermined code of at least one digit dialled from an extension number, which is identified with a memory facility, as an instruction to store information, and is adapted to interpret ensuing digits as representing items of receptionist's information, and to store such information in the identified memory facility, and further to cease storing information on receipt of a further predetermined dialled digit code representing an instruction that the information message has ended.

6.      A receptionist's aid as claimed in claim 5 in which the signal processing means is adapted to delete information from a memory facility .identified with a dialled extension number, on receiving a predetermined code of dialled digits from that extension number.

7.      A receptionist's aid as claimed in any one of claims 4,5 or 6 in which the signal processing means is connected to automatically identify all telephone extension numbers, dialled from the private automatic branch exchange unit itself, with a memory facility representing a person normally to be found at that extension number, and further to automatically check whether that memory facility representing that member has receptionists's information stored therein, and if so, to display that information.

8.      A receptionist's aid as claimed in claim 7, in which play-back means is provided for automatically transmitting a verbal message to a caller on an incoming line, if receptionist's information is found in the memory facility representing the person at the extension number required by the caller, and switching means is provided for routing the incoming call back from

/.....

the extension line to the receptionist's telephone piece.

9. A receptionist's aid as claimed in any one of claims 4 to 8 in which each memory facility represents each person normally to be found at a respective extension number, and the signal processing means is adapted to identify receptionist's information for each person by means of an additional digit code dialled after the extension number.

10. A receptionist's aid as claimed in any one of the preceeding claims in which the input means includes a keyboard having information input keys each representing a standard phrase describing receptionist's information.

11. A receptionist's aid as claimed in claim 10 in which the keyboard includes alpha-numerical input keys for entering the initials of a person after the entering of an extension number, the extension number and initials identifying a memory facility representing that person, who can be found at that extension number.

12. A receptionist's aid as claimed in claim 3 in which the means for identifying a dialled extension number includes a pulse counter.

13. A receptionist's aid as claimed in any one of the preceding claims in which is included a printer for printing out stored information, and the input means and signal processing means is adapted to selectively activate the printer.

14. A method of aiding a receptionist utilising an addressable memory, input means, display means and signal processing means for recording input information in the memory and carrying out input instructions for deletion and for display of recorded information, said method comprising: connecting a private automatic branch exchange to have extension lines connected to a decoder for interpreting dialled digits as input information and record and deletion instructions; dialling an extension number to address a memory facility in the memory which represents a person normally found at that extension; identifying the dialled extension number with that memory facility representing that person, dialling and identifying an ensuing predetermined code of dialled digits as receptionist's information for that person;

/.....

0074663

-22-

dialling and identifying a further ensuing predetermined code of dialled digits for instructions to store that information in that memory facility; and, dialling and identifying a still further ensuing predetermined code of dialled digits for instructing that the message has ended.

15. A method of aiding a receptionist as claimed in claim 14, in which there is provided for the dialling and identifying of a further alternative predetermined code of dialled digits for the deletion of stored information, after the dialling of an extension number.

16. A method of aiding a receptionist as claimed in claim 14 or 15, in which there is provided for the automatic identification of an extension number dialled from the private automatic branch exchange unit itself, with a memory facility representing a person to be found at that extension number; and, automatically displaying any receptionist's information stored in that memory facility on a receptionist's display.

/.....

17.   A receptionist's aid as claimed in claim 16 in which there is provided for the automatic routing, on the finding of any information in a memory facility, of an incoming call from which that extension number was requested, back to the receptionist's telephone piece.

18.   A receptionist's aid as claimed in claim 17 in which there is provided for, on the finding of any information in a memory facility, the automatic playing of a recorded message to a caller on an incoming line from which that extension number was requested.

19.   A method of aiding a receptionist as claimed in claim 14 and substantially as herein described.

20.   A private automatic branch exchange operatively connected to a receptionist's aid as claimed in any one of the preceeding claims.

21.   A receptionist's aid substantially as herein described with reference to, and as illustrated in, Figures 1 or 2 of the accompanying drawings.

0074663

FIG. 1

FIG. 2